# EUROPEAN PATENT APPLICATION

(11) **EP 4 644 829 A1**
(43) Date of publication of application: **05.11.2025**
(21) Application number: 25738986.6
(22) Date of filing: 09.01.2025
(51) Int. Cl.: G01B 5/14, G01B 5/00, G01B 3/20

(54) **LEAD TAB POSITION MEASURING DEVICE AND LEAD TAB POSITION MEASURING METHOD USING SAME**

(30) Priority: 12.01.2024 KR 20240005393
(71) Applicant: LG Energy Solution, Ltd., Seoul 07335 (KR)
(72) Inventor: KIM, Won Keun, Daejeon 34122 (KR)
(74) Representative: Goddar, Heinz J.
(86) International application number: PCT/KR2025/000495
(87) International publication number: WO 2025/150913

(57) **Abstract**

A lead tab position measuring device related to one example of the present invention may comprise a cell seating portion arranged so that a battery cell including a pouch having a cup portion, an electrode assembly accommodated in the cup portion, and a pair of lead tabs electrically connected to the electrode assembly and arranged to protrude to a first end of the pouch and a second end in a direction opposite to the first end, respectively, is seated to be erectable, and a measuring part mounted on the cell seating portion to measure a first gap between a third end connecting the first end and the second end and seated on the cell seating portion, and any one of the lead tabs.

## Description

### Technical Field

The present invention relates to a lead tab position measuring device and a lead tab position measuring method using the same, and more specifically, relates to a lead tab position measuring device capable of accurately measuring a gap between a third end, which is a bottom surface of a cup portion of a battery cell, and a lead tab using a digital measuring part.

This application claims the benefit of priority based on Korean Patent Application No. 10-2024-0005393 dated January 12, 2024, the disclosure of which is incorporated herein by reference in its entirety.

### Background Art

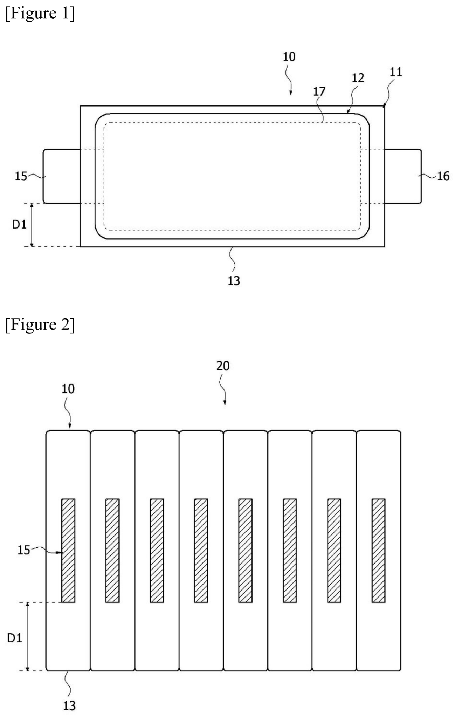

Figure 1 schematically illustrates a front view of a battery cell.

The battery cell is manufactured through a cell assembly process, an activation process, and a degassing process. Then, a plurality of battery cells can be assembled into a battery pack.

The cell assembly process comprises a laminating step of an electrode assembly (17), a forming step of a pouch (11) having a cup portion (12), a step in which the electrode assembly (17) is accommodated in the cup portion (12) of the pouch (11) and the pouch (11) is sealed by heat fusion, and a step in which an electrolyte is injected into the cup portion (12) of the pouch (11) so that the electrode assembly (17) is impregnated.

The activation process is a process of activating the battery cell (10) while repeating charging and discharging of the battery cell (10). The degassing process is a process for removing gas generated upon the activation process.

The battery cell (10) comprises an electrode assembly (17) arranged with lead tabs (15, 16), a pouch (11) having a cup portion (12), and an electrolyte. The electrode assembly (17) is obtained by sequentially laminating a negative electrode and a positive electrode via a separator.

The lead tabs (15, 16) comprise a negative electrode tab (15) electrically connected to the negative electrode and a positive electrode tab (16) electrically connected to the positive electrode. The negative electrode tab (15) and the positive electrode tab (16) are electrically connected to the electrode assembly (17), and are arranged to be exposed to the outside of the pouch (11).

Hereinafter, for convenience of explanation, one surface of the cup portion (12) forming the bottom surface of the battery cell (10) when the battery cell (10) is disposed upright is referred to as a "third end (13)."

Figure 2 schematically illustrates a side view of a battery pack composed of a plurality of battery cells.

The battery cell (10) is manufactured through the cell assembly process, the activation process, and the degassing process, which can be manufactured into a battery pack (20).

Referring to Figure 2, the plurality of battery cells (10) is erected so that the third end (13) forms the bottom surface of the battery pack (20) and the respective cup portions (12) are aligned to be in contact with each other, thereby being assembled into the battery pack (20).

After the plurality of battery cells (10) is manufactured into the battery pack (20), a characteristic test such as an insulation test is performed. A connection part (not shown) is arranged in a characteristic test device (not shown) to which the lead tabs of each battery cell (10) are electrically connected.

However, if the battery pack (20) is assembled in a state where the lead tabs are not aligned in the correct position, there is a problem that it is difficult to accurately measure the performance of the battery pack (20) due to the lead tabs not being connected to the connection part upon the characteristic test of the battery pack (20).

To minimize problems in the assembly step of the battery pack (20), which is a final finished product, it is necessary to accurately measure the position of the lead tabs (15 or 16) in the cell assembly process of assembling battery cells (10).

In the cell assembly process, a lead tab position inspection is performed, which measures a first gap (D1) between the third end (13) of the pouch (11) and the lead tab (15 or 16). The position of the lead tab (15 or 16) is a major factor affecting the quality of the battery pack (20).

The lead tab position inspection is for measuring the first gap (D1) between the third end (13) of the pouch (11) and the lead tab to inspect the position of the lead tab (15 or 16) with respect to the third end (13) of the pouch (11).

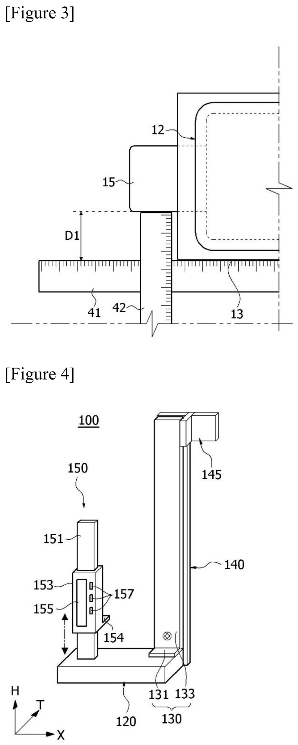

Figure 3 is a diagram for explaining a process of conventionally measuring a position of a lead tab of a battery cell using two measuring rulers.

Referring to Figure 3, conventionally, a worker performed the lead tab position inspection using two measuring rulers (41, 42). The worker placed a first measuring ruler (41) on the third end (13) corresponding to the bottom surface of the battery cell (10), and then visually measured, in a state where a second measuring ruler (42) was disposed at a right angle with respect to the first measuring bar (154), the position of the lead tab (15 or 16) through the gradation of the second measuring ruler (42). The gradation of the measuring ruler is in a unit of at least 0.5mm. The worker can measure the position of the lead tab in the unit of 0.5mm.

Conventionally, upon the lead tab position inspection, the worker had to handle two measuring rulers (41, 42), so that the measurement time was long. In addition, conventionally, as the worker measured the position of the lead tab with the naked eye, the position measurement value of the lead tab was not constant depending on the skill level of the worker.

### Disclosure

### Technical Problem

The present invention has been devised to solve the problems, which is intended to provide a lead tab position measuring device capable of accurately measuring a gap between a third end, which is a bottom surface of a cup portion of a battery cell, and a lead tab using a digital measuring part, and a lead tab position measuring method using the same.

In addition, it is intended to provide a portable lead tab position measuring device in which a cell seating portion supporting a battery cell to be erectable is arranged in a foldable manner.

### Technical Solution

The lead tab position measuring device related to one example of the present invention may comprise a cell seating portion arranged so that a battery cell including a pouch having a cup portion, an electrode assembly accommodated in the cup portion, and a pair of lead tabs electrically connected to the electrode assembly and arranged to protrude to a first end of the pouch and a second end in a direction opposite to the first end, respectively, is seated to be erectable, and a measuring part mounted on the cell seating portion to measure a first gap between a third end connecting the first end and the second end and seated on the cell seating portion, and any one of the lead tabs.

The cell seating portion may be arranged such that the third end is seated thereon, and the first end and the second end are supported in a state where the first end and the second end are erected.

Also, the cell seating portion may comprise a first support portion having a first seating surface on which the third end can be seated, and arranged to support the first end to be erectable, and a second support portion rotatably mounted on the first support portion at a predetermined angle so as to be folded to overlap with the first support portion or unfolded relative to the first support portion, and arranged to support the second end to be erectable upon unfolding operation.

In addition, the second support portion may have a second seating surface positioned on the same plane as the first seating surface of the first support portion upon being unfolded relative to the first support portion, and may be arranged so that both sides of the third end are horizontally seated on the first seating surface and the second seating surface, respectively.

Furthermore, when the second support portion is folded to overlap with the first support portion, the second seating surface and the first support portion may come into contact.

Also, the second support portion may be arranged to be unfolded perpendicular to the first support portion upon rotation in an unfolding direction.

In addition, the cell seating portion may comprise a bottom portion supporting the first support portion and the measuring part.

Furthermore, the measuring part may be mounted parallel to the first support portion along a height direction perpendicular to the bottom portion, and may be arranged to be movable in a direction closer to or further away from the first seating surface of the first support portion.

Also, the measuring part may be arranged to measure a first gap between any one of the lead tabs protruding from the first end and the first seating surface.

In addition, the measuring part may comprise a guide part mounted on the bottom portion along the height direction, and a measuring member having a measuring bar protruding toward the first support portion, movably mounted on the guide part, and arranged to move in a direction further away from the first seating surface and to be contactable with the lead tab spaced above the first seating surface.

Furthermore, the measuring member may comprise a display part in which a first gap between the measuring bar and the first seating surface is displayed as a number.

Also, the measuring member may be arranged to measure the first gap in a unit of 0.01mm.

In addition, the measuring member may comprise a digital vernier caliper.

Furthermore, the measuring bar may be arranged to protrude from the measuring member toward the first support portion in parallel with the first seating surface, and may be arranged to be movable together with the measuring member.

Also, the second support portion may have a second support surface supporting the second end of the battery cell to be erectable, and a locking protrusion having the second seating surface and arranged on the second support surface to support the third end of the battery cell.

In addition, the locking protrusion may have an underlay portion bent and formed from the second seating surface, and may be arranged such that the second seating surface is positioned at the same height as the first seating surface at a position spaced apart from the bottom portion in an unfolded state of the second support portion.

Furthermore, the locking protrusion may be arranged such that when the second support portion is folded to overlap with the first support portion, the second seating surface is in contact with the first support portion, whereby the second support portion no longer rotates.

In addition, the lead tab position measuring method related to one example of the present invention is a lead tab position measuring method using the lead tab position measuring device, which may comprise a step of seating the battery cell in an upright state on the cell seating portion and a step of measuring a first gap between the third end of the battery cell seated on the cell seating portion and any one of the lead tabs.

### Advantageous Effects

As discussed above, the lead tab position measuring device related to one example of the present invention and the lead tab position measuring method using the same have the following effects.

As described in the Background Art, conventionally, the worker placed the first measuring ruler on the third end corresponding to the bottom surface of the battery cell, disposed the second measuring ruler orthogonally with respect to the first measuring ruler, using two measuring rulers, and then visually measured the position of the lead tab through the gradation of the second measuring ruler, whereby the measurement time was long and the position measurement value of the lead tab could vary depending on the skill level of the worker.

In contrast, the present invention enables the worker to accurately measure the first gap between the third end of the cup portion of the battery cell and the lead tab with only a simple action of placing the battery cell on the cell seating portion and moving the measuring part to a position contactable with the lead tab.

Also, the present invention can precisely measure the measurement value in a unit of 0.01mm using a digital measuring part, and the measurement value can be displayed as a number so that the worker can easily recognize the measurement value.

In addition, the cell seating portion supporting the battery cell to be erectable is arranged in a foldable manner, thereby being portable.

### Description of Drawings

Figure 1 schematically illustrates a front view of a battery cell.
Figure 2 schematically illustrates a side view of a battery pack composed of a plurality of battery cells.
Figure 3 is a diagram for explaining a process of conventionally measuring a position of a lead tab of a battery cell using two measuring rulers.
Figure 4 schematically illustrates a folded state diagram of a lead tab position measuring device, in one example of the present invention.
Figure 5 schematically illustrates an unfolded state diagram of a lead tab position measuring device, in one example of the present invention.
Figure 6 is a state diagram in which a battery cell is seated on a lead tab position measuring device according to one example of the present invention.
Figure 7(a) is an A-A cross-sectional diagram of Figure 6, and Figure 7(b) is a B-B cross-sectional diagram of Figure 6.
Figure 8(a) is an operational state diagram of a measuring part when the measuring bar of the measuring member is positioned at a reference point, and Figure 8(b) is an operational state diagram of the measuring part when the measuring bar of the measuring member is in contact with the first lead tab.

### Mode for Invention

Hereinafter, with reference to the attached drawings, a lead tab position measuring device according to a preferred example of the present invention and a lead tab position measuring method using the same will be described.

In the present examples, regardless of the reference numerals, the same or corresponding components are given by the same or similar reference numerals, duplicate descriptions thereof will be omitted, and for convenience of explanation, the size and shape of each component member as shown can be exaggerated or reduced.

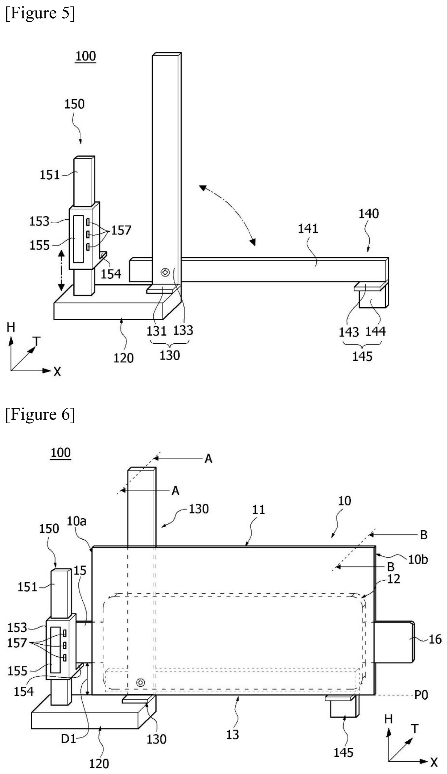

Figure 4 is a folded state diagram of a lead tab position measuring device according to one example of the present invention, Figure 5 schematically illustrates an unfolded state diagram of a lead tab position measuring device, and Figure 6 is a state diagram in which a battery cell is seated on a lead tab position measuring device according to one example of the present invention.

A lead tab position measuring device (100) related to one example of the present invention may comprise a cell seating portion (110) arranged so that a battery cell (10) including a pouch (11) having a cup portion (12), an electrode assembly (17) accommodated in the cup portion (12), a pair of lead tabs (15, 16) electrically connected to the electrode assembly (17) and arranged to protrude to a first end (10a) of the pouch (11) and a second end (10b) in a direction opposite to the first end (10a), respectively, is seated to be erectable, and a measuring part (150) mounted on the cell seating portion (110) to measure a first gap (D1) between a third end (13) connecting the first end (10a) and the second end (10b) and seated on the cell seating portion (110), and any one of the lead tabs (15).

The cell seating portion (110) is arranged so that the third end (13) of the battery cell can be seated thereon. The cell seating portion (110) may support the first end (10a) and the second end (10b) so that the first end (10a) and the second end (10b) are erected.

For convenience of explanation, the pair of lead tabs (15, 16) are divisionally referred to as the first lead tab (15) and the second lead tab (16). The first and second lead tabs (15, 16) are electrically connected to the electrode assembly (17) accommodated in the cup portion (12). The first and second lead tabs (15, 16) are disposed to be spaced apart from each other in the longitudinal direction (L) of the battery cell.

Referring to Figure 6, the battery cell (10) may have a plurality of ends along the circumferential direction, and as one example, may have a pair of ends where the lead tabs (15, 16) are exposed to the outside and a pair of ends where the lead tabs are not formed. In this instance, the first end (10a) of the battery cell (10) is one end of the battery cell (10) where the first lead tab (15) is exposed to the outside, and the second end (10b) of the battery cell (10) is one end of the battery cell (10) where the second lead tab (16) is exposed to the outside.

The third end (13) of the battery cell (10) refers to a part connecting the first end (10a) and the second end (10b) of the battery cell and seated on the cell seating portion (110). The third end (13) may correspond to the bottom surface of the cup portion (12) when the battery cell (10) is erected.

The cell seating portion (110) comprises a first support portion (130) having a first seating surface (131) on which the third end (13) can be seated, and arranged to support the first end (10a) to be erectable.

In addition, the cell seating portion (110) may comprise a bottom portion (120) supporting the first support portion (130) and the measuring part (150). The first support portion (130) and the measuring part (150) are disposed to be spaced apart from each other in parallel along the height direction (H) perpendicular to the bottom portion (120).

The first support portion (130) has a first seating surface (131) on which the third end (13) of the cup portion (12) is seated, and a first support surface (133) extending from the first seating surface (131) along the height direction (H).

The first seating surface (131) is a surface parallel to the bottom portion (120). The first support surface (133) is a surface arranged perpendicular to the bottom portion (120).

In addition, the cell seating portion (110) may comprise a second support portion (140) rotatably mounted to the first support portion (130) at a predetermined angle, arranged to be folded to overlap with the first support portion (130) or to be unfolded relative to the first support portion (130), and arranged so that the second end (10b) can be seated in an upright state upon unfolding operation. The second end (10b) is one end of the battery cell (10) arranged with the second lead tab (16).

The second support portion (140) is arranged to be folded and unfolded relative to the first support portion (130) in a foldable manner.

When the second support portion (140) is folded to overlap with the first support portion (130), the second seating surface (143) and the first support portion (130) may come into contact.

The second support portion (140) has a second seating surface (143) positioned on the same plane as the first seating surface (131) of the first support portion (130) upon being unfolded relative to the first support portion (130). The second support portion (140) may be arranged so that both sides of the third end (13) are horizontally seated on the first seating surface (131) and the second seating surface (143), respectively.

The second support portion (140) may be arranged to be unfolded perpendicular to the first support portion (130) upon rotation in an unfolding direction.

The second support portion (140) may comprise a second supporting surface (141) supporting the second end (10b) of the battery cell (10) to be erectable, and a locking protrusion (145) having the second seating surface (143) protruding from the second supporting surface (141).

When the second support portion (140) is positioned perpendicular to the first support portion (130), the second support surface (141) is positioned parallel to the first seating surface (131) along the length direction (L) perpendicular to the height direction (H).

Referring to Figures 4 and 5, when the second support portion (140) is folded to overlap with the first support portion (130), the second seating surface (143) is in contact with the first support portion (130), whereby the locking protrusion (145) may limit the movement so that the second support portion (140) no longer rotates. The locking protrusion (145) may act as a stopper limiting the movement of the second support portion (140) when the second support portion (140) is folded to overlap with the first support portion (130).

Referring to Figure 5, the locking protrusion (145) may be arranged so that when the second support portion (140) is unfolded relative to the first support portion (130), the second seating surface (143) is placed on the same plane as the first seating surface (131).

In addition, the locking protrusion (145) may be arranged so that the second seating surface (143) is placed at a position spaced apart from the bottom portion (120) when the second support portion (140) is unfolded relative to the first support portion (130).

The locking protrusion (145) is arranged to protrude in an ┐-shape on the second support portion (141). The locking protrusion (145) comprises the second seating surface (143) and an underlay portion (144).

The second seating surface (143) protrudes perpendicular to the second support portion (141).

The underlay portion (144) is bent and formed on the second seating surface (143). The underlay portion (145) functions as a support so that the second seating surface (143) is positioned at the same height as the first seating surface (131) when the second supporting member (140) is unfolded relative to the first supporting member (130).

Through such a structure, the locking protrusion (145) may support the third end (13) at the same height as the first seating surface (131).

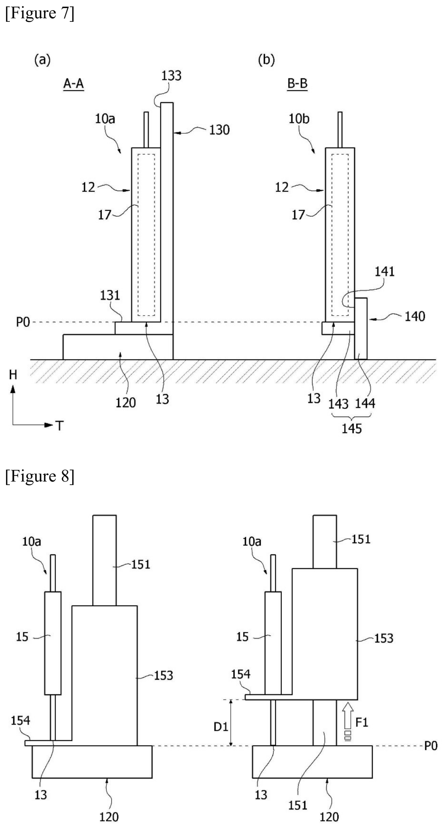

Figure 7(a) is an A-A cross-sectional diagram of Figure 6, and Figure 7(b) is a B-B cross-sectional diagram of Figure 6.

Referring to Figures 6 and 7, through such a structure, the first seating surface (131) and the second seating surface (143) horizontally support the third end (13) of the battery cell (10), and the first support surface (133) and the second support surface (141) support a partial region of one surface (14) of the battery cell (10), whereby the cell seating portion (110) may support the battery cell (10) to be erectable.

Referring to Figures 7(a) and 7(b), the battery cell (10) is seated on the cell seating portion (110) such that both sides of the third end (13) are each seated horizontally on the first seating surface (131) and the second seating surface (143), respectively, and one surface (14) of the battery cell is in contact with the first support surface (133) and the second support surface (141).

Accordingly, the battery cell (10) is disposed so that the first end (10a) and the second end (10b) are placed upright on the cell seating portion (110). The first end (10a) of the battery cell (10) is placed on the first support portion (130), and the second end (10b) of the battery cell (10) is placed on the second support portion (140).

As one example, the first end (10a) may be a part including a short side edge of the pouch (11) including the first lead tab (15) and a portion of the third end (13) adjacent to the first lead tab (15). The second end (10b) may be a part including a short side edge of the pouch (11) including the second lead tab (16) and a portion of the third end (13) adjacent to the second lead tab (16).

Hereinafter, the measuring part (150) will be described.

The measuring part (150) is for measuring a first gap (D1) between the first lead tab (15) of the battery cell (10) seated on the cell seating portion (110) and the third end (13).

The measuring part (150) is mounted on the bottom portion (120) and is disposed to be spaced apart from the first support portion (130) in parallel along the height direction (H).

The measuring part (150) is arranged to be movable in a direction closer to or further away from the first seating surface (131) of the first support portion (130). The measuring part (150) may measure the first gap (D1) between the first lead tab (15) protruding from the first end part (10a), and the first seating surface (131).

Referring to Figure 6, the measuring part (150) comprises a guide part (151) and a measuring member (153). The measuring member (153) is arranged with a measuring bar (154), a display part (155), and a plurality of operating buttons (157).

The guide part (151) is mounted on the bottom portion (120) along the height direction (H). The guide part (151) is disposed to be spaced apart from the first support portion (130).

The measuring member (153) has a measuring bar (154) protruding toward the first support portion (130) and is movably mounted on the guide part (151).

The measuring member (153) is arranged to be movable in a direction further away from or closer to the bottom portion (120) along the height direction (H). The measuring member (153) moves in a direction further away from the first seating surface (131) and moves closer to the lead tab (15) spaced apart from the upper portion of the first seating surface (131).

The measuring bar (154) is arranged to protrude to one side of the measuring member (153) parallel to the first seating surface (131). The measuring bar (154) is positioned parallel to the thickness direction (T) perpendicular to the height direction (H) and the length direction (L), respectively. The measuring bar (154) is arranged to be contactable with the first lead tab (15) protruding from the first end (10a) of the battery cell (10) placed on the first support portion (130).

The measuring bar (154) may move in the first direction (F1) further away from the bottom portion (120) along the height direction (H) together with the measuring member (153) to be in contact with the first lead tab (15) located on the upper portion of the bottom portion (120).

Figure 8(a) is an operational state diagram of a measuring part when the measuring bar of the measuring member is positioned at a reference point, and Figure 8(b) is an operational state diagram of the measuring part when the measuring bar of the measuring member is in contact with the first lead tab.

Referring to Figure 8, the position of the first seating surface (131) is preset as a reference point (P0), and the measuring member (153) is arranged to measure a first gap (D1) between the reference point (P0) and the measuring bar (154).

Also, the measuring member (153) may measure the first gap (D1) in a unit of 0.01mm. Specifically, the measuring member (153) may be arranged to be capable of measuring the position of the measuring bar (154) with respect to the reference point (P0) in a unit of 0.01mm.

In addition, the measuring member (153) may comprise a digital vernier caliper or an electronic vernier caliper.

Furthermore, the display part (155) is arranged so that the first gap (D1) between the measuring bar (154) and the first seating surface (131) is displayed as a number.

The measurement value of the first gap (D1) is arranged to be displayed as a number. The display part (155) is arranged to be exposed to the outside of the measuring member (153).

In addition, the measuring member (153) may adjust the measurement unit in millimeter (mm) units, inch (inch) units, or feet (ft) units by comprising a plurality of operation buttons (157).

Hereinafter, a method of measuring a first gap (D1) between a third end (13) of a cup portion (12) and a first lead tab (15) using the lead tab position measuring device (100) related to one example of the present invention will be described.

The lead tab position measuring method related to one example of the present invention is a lead tab position measuring method using the lead tab position measuring device, which may comprise a step of seating the battery cell in an upright state on the cell seating portion and a step of measuring a first gap between the third end of the battery cell seated on the cell seating portion and any one of the lead tabs.

A worker unfolds the cell seating portion (110) so that the second support portion (140) is positioned perpendicular to the first support portion (130).

Referring to Figure 6, the worker places the battery cell (10) upright on the cell seating portion (110). In this instance, in the battery cell (10), the first end (10a) of the battery cell (10) is placed on the first support portion (130), and the second end (10b) of the battery cell (10) is placed on the second support portion (140). In this instance, the third end (13) is placed horizontally on the first seating surface (131) and the second seating surface (143).

Next, the worker can measure the first gap (D1) between the third end (13) and the first lead tab (15) by moving the measuring member (153) in the first direction (F1) further away from the bottom portion (120) along the height direction (H) so that the measuring bar (154) moves from the reference point (P0, see Figure 8(a)) to the position (see Figure 8(b)) in contact with the first lead tab (15).

The worker can recognize the measurement value of the first gap (D1) through the number displayed on the display part (155) of the measuring member (154).

Through such processes, the present invention can allow the worker to measure the first gap (D1) between the third end (13) of the cup portion (12) of the battery cell (10) and the lead tab with only a simple action of placing the battery cell (10) on the cell seating portion (110) and then moving the measuring bar (154) to the position being contactable with the first lead tab (15).

The present invention has a simple operation method, thereby requiring a measurement time shorter than that of the conventional method, which can measure the first gap (D1) regardless of the skill level of the worker.

Also, the measuring part (150) can allow the worker to quickly recognize the measurement value by displaying the measurement value of the first gap (D1) as a number.

In addition, the measuring part (150) can measure the first gap (D1) in a unit of 0.01mm in a digital manner, thereby improving an accuracy degree of the position measurement value of the lead tab.

The measuring part (150) can measure the first gap (D1) between the third end (13) of the cup portion (12) and the first lead tab (15) in a digital manner in a state where the battery cell (10) is stably supported by the cell seating portion (110), whereby the present invention can increase the accuracy degree of the measurement.

In addition, the present invention can measure the first gap (D1) between the third end (13) of the cup portion (12) and the first lead tab (15) accurately regardless of the skill level of the worker by having a simple operation method, thereby maintaining reproducibility of the measurement at a constant level.

As a result, the present invention can increase the accuracy degree and reproducibility of the measurement, thereby increasing reliability of the measurement value.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a lead tab position measuring device related to one example of the present invention and a lead tab position measuring method using the same, a first gap between a third end of a cup portion of a battery cell and a lead tab can be accurately measured.

## Claims

1. A lead tab position measuring device comprising:
a cell seating portion arranged so that a battery cell including a pouch having a cup portion, an electrode assembly accommodated in the cup portion, and a pair of lead tabs electrically connected to the electrode assembly and arranged to protrude to a first end of the pouch and a second end in a direction opposite to the first end, respectively, is seated to be erectable; and
a measuring part mounted on the cell seating portion to measure a first gap between a third end connecting the first end and the second end and seated on the cell seating portion, and any one of the lead tabs.

2. The lead tab position measuring device according to claim 1, wherein
the cell seating portion supports the first end and the second end so that the third end is seated thereon and the first end and the second end are erected.

3. The lead tab position measuring device according to claim 1, wherein the cell seating portion comprises:
a first support portion having a first seating surface on which the third end can be seated, and arranged to support the first end to be erectable; and
a second support portion rotatably mounted on the first support portion at a predetermined angle to be folded to overlap with the first support portion or unfolded relative to the first support portion, and arranged to support the second end to be erectable upon unfolding operation.

4. The lead tab position measuring device according to claim 3, wherein
the second support portion has a second seating surface positioned on the same plane as the first seating surface of the first support portion upon being unfolded relative to the first support portion, and is arranged so that both sides of the third end are horizontally seated on the first seating surface and the second seating surface, respectively.

5. The lead tab position measuring device according to claim 3, wherein
when the second support portion is folded to overlap with the first support portion, the second seating surface and the first support portion come into contact.

6. The lead tab position measuring device according to claim 3, wherein
the second support portion is arranged to be unfolded perpendicular to the first support portion upon rotation in an unfolding direction.

7. The lead tab position measuring device according to claim 3, wherein
the cell seating portion further comprises a bottom portion supporting the first support portion and the measuring part, and
the measuring part is mounted parallel to the first support portion along a height direction perpendicular to the bottom portion, and arranged to be movable in a direction closer to or further away from the first seating surface of the first support portion to measure a first gap between any one of the lead tabs protruding from the first end and the first seating surface.

8. The lead tab position measuring device according to claim 7, wherein the measuring part comprises:
a guide part mounted on the bottom portion along the height direction; and
a measuring member having a measuring bar protruding toward the first support portion, movably mounted on the guide part, and arranged to move in a direction further away from the first seating surface and to be contactable with the lead tab spaced above the first seating surface.

9. The lead tab position measuring device according to claim 8, wherein
the measuring member further comprises a display part in which a first gap between the measuring bar and the first seating surface is displayed as a number.

10. The lead tab position measuring device according to claim 9, wherein
the measuring member is arranged to measure the first gap in a unit of 0.01mm.

11. The lead tab position measuring device according to claim 8, wherein
the measuring member comprises a digital vernier caliper.

12. The lead tab position measuring device according to claim 8, wherein
the measuring bar is arranged to protrude from the measuring member toward the first support portion in parallel with the first seating surface, and arranged to be movable together with the measuring member.

13. The lead tab position measuring device according to claim 4, wherein
the second support portion has a second support surface supporting the second end of the battery cell to be erectable, and a locking protrusion having the second seating surface and arranged on the second support surface to support the third end of the battery cell, and
the locking protrusion has an underlay portion bent and formed from the second seating surface, and is arranged such that the second seating surface is positioned at the same height as the first seating surface at a position spaced apart from the bottom portion in an unfolded state of the second support portion.

14. The lead tab position measuring device according to claim 13, wherein
the locking protrusion is arranged such that when the second support portion is folded to overlap with the first support portion, the second seating surface is in contact with the first support portion, whereby the second support portion no longer rotates.

15. A lead tab position measuring method using the lead tab position measuring device according to claim 1, comprising:
a step of seating the battery cell in an upright state on the cell seating portion; and
a step of measuring a first gap between the third end of the battery cell seated on the cell seating portion and any one of the lead tabs.
